# EUROPÄISCHE PATENTSCHRIFT

(11) **EP 3 046 680 B1**
(45) Veröffentlichungstag und Bekanntmachung des Hinweises auf die Patenterteilung: **04.10.2017**
(21) Anmeldenummer: 14756007.2
(22) Anmeldetag: 18.08.2014
(51) Int. Cl.: B05B 11/00

(54) **SPENDERSYSTEM**
DISPENSER SYSTEM
SYSTÈME DISTRIBUTEUR

(30) Priorität: 18.09.2013 DE 102013218741
(43) Veröffentlichungstag der Anmeldung: 27.07.2016
(73) Patentinhaber: Aptar Radolfzell GmbH, 78315 Radolfzell (DE)
(72) Erfinder: BRUDER, Thomas, 78467 Konstanz (DE)
(74) Vertreter: Patentanwaltskanzlei Cartagena
(86) Internationale Anmeldenummer: PCT/EP2014/067593
(87) Internationale Veröffentlichungsnummer: WO 2015/039823

(56) Entgegenhaltungen:
- GB-A- 2 483 087
- US-A1- 2011 297 275

## Beschreibung

Die Erfindung betrifft ein Spendersystem umfassend einen Vorratsbehälter zum Bevorraten eines Mediums mit mindestens einem Auslassventil und ein wiederbefüllbares Spendermodul mit einer mit einem Medium befüllbaren Mediumkammer, mit einer zum Austragen des Mediums aus der Mediumkammer betätigbaren, einen Einlasskanal aufweisenden Pumpvorrichtung und mit mindestens einem Einlassventil, für ein Befüllen der Mediumkammer das Spendermodul mit dem Vorratsbehälter koppelbar ist, bei einem Befüllen das mindestens eine Einlassventil und das mindestens eine Auslassventil zwangsgeführt oder druckbeaufschlagt geöffnet sind, sodass die Mediumkammer mit dem Vorratsbehälter kommuniziert ist, und in einem getrennten Zustand des Spendermoduls und des Vorratsbehälters das mindestens eine Einlassventil und das mindestens eine Auslassventil geschlossen sind.

Aus den Dokumenten WO 2005/101969 A2, EP 2 383 204 A1 und EP 2 596 870 A1 sind jeweils wiederbefüllbare Spendermodule bekannt, welche an der Bodenfläche ein Rückschlagventil aufweisen. Die wiederbefüllbaren Spendermodule sind mittels des Rückschlagventils anstelle eines Austragkopfs auf einen herkömmlichen Spender mit einer Austragvorrichtung für ein Befüllen aufsetzbar. Das Befüllen des Spendermoduls wird dabei durch die Austragvorrichtung des zweiten Spenders bewirkt, wobei beispielsweise das Medium in einen Behälter des wiederbefüllbaren Spenders gesprüht wird. Die Spendermodule weise Entlüftungsöffnungen auf, über welche Luft aus dem Spendermodul bei einem Befüllen entweichen kann.

Aus US 2011/0297275 A1 ist ein Spendersystem umfassend einen Vorratsbehälter und ein wiederbefüllbares Spendermodul mit einer volumenvariablen Mediumkammer bekannt, wobei das Spendersystem eine Stellvorrichtung umfasst, mittels der bei oder nach einem Koppeln des Spendermoduls mit dem Vorratsbehälter ein Differenzdruck zwischen der Mediumkammer und dem Vorratsbehälter erzeugbar ist, um Medium aus dem Vorratsbehälter in die Mediumkammer zu fördern.

### Aufgabe und Lösung

Es ist eine Aufgabe der Erfindung, ein Spendersystem umfassend einen Vorratsbehälter und ein Spendermodul zu schaffen, welches eine zuverlässige Befüllung bei Verwendung sensibler Medien ermöglicht.

Diese Aufgabe wird gelöst durch die Spendersysteme mit den Merkmalen des Anspruch 1.

Gemäß der Erfindung ist eine Stellvorrichtung vorgesehen, wobei die Stellvorrichtung mindestens einen Magneten und mindestens ein mit dem Magneten für eine Volumenänderung der Mediumkammer zusammenwirkendes, zumindest partiell magnetisches oder magnetisierbares Element aufweist.

Die Mediumkammer ist als abgeschlossene Kammer mit einem variablen Volumen gestaltet. Als abgeschlossene Kammer wird eine Kammer bezeichnet, welche keine Belüftungsöffnung oder dergleichen für einen Druckausgleich bei einer Veränderung eines Füllvolumens aufweisen. Bei einer abgeschlossenen Kammer findet somit kein oder zumindest kein relevanter Mediumaustausch mit der Umgebung statt. Ein Medium ist in einer derartigen Kammer folglich im Wesentlichen ohne Kontakt zu der Umgebung bevorratbar. Das Spendermodul ist somit auch für sensible Medien, wie konservierungsmittelfreie pharmazeutische oder kosmetische Medien geeignet.

Bei einer Verwendung des Spendermoduls wird das Medium ausgetragen und ein Volumen der Mediumkammer für einen Druckausgleich verkleinert. Bei oder nach dem Koppeln des Spendermoduls wird das Volumen der Mediumkammer mittels mindestens eines Magneten und mindestens eines mit dem Magneten zusammenwirkenden, zumindest partiell magnetisches oder magnetisierbares Element vergrößert. Dadurch wird ein Druck in der Kammer reduziert. Sofern in der Mediumkammer vor einer Vergrößerung ein Normaldruck herrscht, wird durch die Reduzierung der Größe ein Unterdruck erzeugt. Sofern ein Medium in der Mediumkammer und dem Vorratsbehälter unter Druck bevorratet ist, ist es auch denkbar, dass ein Druck nach der Vergrößerung des Volumens größer oder gleich dem Normaldruck ist. In jedem Fall ist der erzeugte Druck kleiner als ein in dem Vorratsbehälter herrschender Druck.

In einer Ausgestaltung ist der Magnet an dem Spendermodul angeordnet und das damit zusammenwirkende Element an dem Vorratsbehälter. In vorteilhaften Ausgestaltungen ist an dem Vorratsbehälter ein Magnet vorgesehen, welcher mit einem partiell magnetisierbaren Element des Spendermoduls zusammenwirkt. Nach einem Trennen übt damit das Spendermodul keine magnetischen Anziehungskräfte auf andere Elemente auf. Für eine Vielzahl an Anwendungen sind Magneten einsetzbar, welche nur eine niedrige Anziehungskraft ausüben. Der an dem Vorratsbehälter und/oder dem Spendermodul angeordnete Magnet ist in einer Ausgestaltung in einem getrennten Zustand des Spendersystems mittels einer Kappe abgedeckt, um die Anziehungskraft abzuschwächen oder zu unterbrechen. Bei einer Kopplung des Spendermoduls mit dem Vorratsbehälter wirken der Magnet und das mindestens partiell magnetisches und/oder magnetisierbares Element für eine Volumenvergrößerung der Mediumkammer zusammen. Das Magnetsystem dient dabei in vorteilhafter Ausgestaltung auch einer mechanischen Kopplung des Spendermoduls mit dem Vorratsbehälter, wobei vorzugsweise zusätzliche Kopplungselemente für eine Zentrierung oder Ausrichtung des Spendermoduls an dem Vorratsbehälter vorgesehen ist.

Als Magnetsystem ist in einer Ausgestaltung ein partiell magnetischer und/oder magnetisierbarer kollabierbarer Beutel als Mediumkammer vorgesehen, welcher aufgrund einer Magnetkraft beim Koppeln aufgeweitet wird. In einer anderen Ausgestaltung weist die Mediumkammer einen Schleppkolben auf, an welchem der mindestens eine Magnet und/oder das mindestens eine partiell magnetische und/oder magnetisierbare Element angeordnet ist und/oder welcher mindestens partiell magnetisch und/oder magnetisierbar gestaltet ist. Der Magnet und das Element liegen vorzugsweise in einem gekoppelten Zustand nicht aneinander an, sondern wirken berührungslos. Dadurch ist eine Trennung ohne größeren Kraftaufwand möglich. In einer Ausgestaltung wird zum Trennen ein die Anziehungskraft unterbrechendes, magnetisch isolierendes Element zwischen den Magnet und das Element gebracht.

Die Stellvorrichtung wird in vorteilhaften Ausgestaltungen automatisch bei einem Kopplungsvorgang oder nach Abschluss eines erfolgreichen Kopplungsvorgangs aktiviert. In anderen Ausgestaltungen ist eine Aktivierung der Stellvorrichtung durch einen Nutzer, beispielsweise mittels Knopfdruck oder dergleichen vorgesehen.

Es versteht sich, dass ein Fassungsvermögen der Mediumkammer üblicherweise kleiner gewählt ist, als ein Fassungsvermögen des Vorratsbehälters. Das wiederbefüllbare Spendermodul weist vorzugsweise ein Fassungsvermögen auf, welches für eine begrenzte kleine Anzahl an Austragvorgängen ausreicht. Insbesondere übersteigt ein Fassungsvermögen vorzugsweise nicht eine Grenze von 100 ml, sodass das Spendermodul auch durch den Konsumenten im Handgepäck bei einer Flugreise mitgeführt werden kann.

In einer Ausgestaltung umfasst die Stellvorrichtung zusätzlich Druckerzeugungselemente, mittels welchen ein erhöhter Druck in dem Vorratsbehälter erzeugbar ist, um Medium aus dem Vorratsbehälter zu fördern. Aufgrund des erhöhten Drucks wird somit Medium aus dem Vorratsbehälter in die Mediumkammer für einen Druckausgleich gefördert. In einer Ausgestaltung ist der Vorratsbehälter als belüftete Quetschflasche gestaltet, wobei die Wandung der Quetschflasche als Druckerzeugungselemente fungieren, mittels welchen bei einem Zusammendrücken ein erhöhter Druck in dem Vorratsbehälter erzeugbar ist. Das mindestens eine Einlassventil und das mindestens eine Auslassventil sind dabei vorzugsweise als druckbeaufschlagte Ventile gestaltet, welche bei Aufbringen der Verformungskraft öffnen, um eine Förderung des Mediums aus dem Vorratsbehälter zu bewirken, und bei Wegfall der Verformungskraft schließen, um einen Rückfluss zu verhindern. In einer anderen Ausgestaltung weist der Vorratsbehälter eine abgeschlossene Kammer mit einem variablen Volumen auf, welche in einem gekoppelten Zustand kraftbeaufschlagt, insbesondere mittels Federelement kraftbeaufschlagt ist. Dadurch wird das in dem Vorratsbehälter bevorratete Medium zuverlässig gefördert.

In einer vorteilhaften Ausgestaltung weisen das Spendermodul und der Vorratsbehälter zueinander komplementäre Kopplungselemente für eine zerstörungsfrei lösbare, wiederholbare, funktionale Kopplung auf, wobei in einem gekoppelten Zustand das mindestens eine Einlassventil und das mindestens eine Auslassventil zumindest zeitweise bei einer Betätigung der Pumpvorrichtung zwangsgeführt oder druckbeaufschlagt geöffnet sind, um in einem gekoppelten Zustand eine Förderung des Mediums aus dem Vorratsbehälter zu bewirken.

In anderen Worten bilden das Spendermodul und der Vorratsbehälter im gekoppelten Zustand eine funktionale Einheit, wobei die Pumpvorrichtung betätigbar ist, um in einem gekoppelten Zustand eine Förderung des Mediums aus dem Vorratsbehälter zu bewirken. In einem getrennten Zustand ist das Spendermodul als eigenständige Vorrichtung nutzbar. Das Spendermodul ist somit sowohl in einem getrennten Zustand als auch in einem gekoppelten Zustand spendefähig. Die Kopplungselemente sind hierzu derart gestaltet, dass eine zerstörungsfrei lösbare, wiederholbare, funktionale Kopplung möglich ist. Vorzugsweise sind die Kopplungselemente und die kommunizierten Ventile, nämlich das mindestens eine Einlassventil und das mindestens eine Auslassventil, als getrennte Bauteile gestaltet, sodass eine fluidische Kopplung über die Ventilelemente und eine mechanische Kopplung über weitere Teile erfolgt. Die Kopplungselemente sind in einer Ausgestaltung als eine Steckverbindung, beispielsweise umfassend Buchsen und Steckstifte gestaltet. In einer anderen Ausgestaltung ist ein Bajonettverschluss vorgesehen. Schließlich erfolgt in noch einer anderen Ausgestaltung eine Verbindung mittels Magnetverschluss. In noch einer anderen Ausgestaltung sind die einzelnen Verbindungssysteme miteinander kombiniert. Beispielsweise ist in einer Ausgestaltung eine Steckverbindung vorgesehen, wobei in einer Rastposition ein Magnetverschluss aktiviert wird. Dabei dienen in einer Ausgestaltung ein Magnet und ein Element der Stellvorrichtung als Magnetverschluss.

Für einen Befüllvorgang sind das mindestens eine Einlassventil und das mindestens eine Auslassventil zwangsgeführt oder druckbeaufschlagt geöffnet. In einer vorteilhaften Ausgestaltung ist vorgesehen, dass in einem gekoppelten Zustand das mindestens eine Einlassventil und das mindestens eine Auslassventil dauerhaft zwangsgeführt geöffnet sind. Hierfür weisen in einer Ausgestaltung das mindestens eine Einlassventil und das mindestens eine Auslassventil zwei zusammenwirkende kraftbeaufschlagte Ventilkolben auf, welche in einem gekoppelten Zustand in eine Öffnungsposition verstellt sind. Eine Kraftbeaufschlagung der Ventilkolben erfolgt in vorteilhaften Ausgestaltungen mittels Rückstellfedern, welche die Ventilkolben jeweils in eine Schließposition zwingen. In anderen Ausgestaltungen sind andere Elemente für eine Kraftbeaufschlagung, beispielsweise mittels Magnetkraft oder dergleichen vorgesehen. Die Ventilkolben weisen vorzugsweise jeweils einen Betätigungsabschnitt auf, wobei die Betätigungsabschnitte der Ventilkolben bei einer Kopplung für eine Zwangsführung der Ventilkolben in die Öffnungsposition zusammenwirken. In einer alternativen Ausgestaltung ist vorgesehen, dass mindestens eines der zwei kommunizierten Ventile, nämlich das mindestens eine Einlassventil und/oder das mindestens eine Auslassventil, als druckgesteuertes Ventil gestaltet ist, sodass in einem gekoppelten Zustand das mindestens eine Einlassventil und/oder das mindestens eine Auslassventil druckgesteuert bei einem Differenzdruck-Schwellwert öffnet. Das mindestens eine druckgesteuerte Ventil ist dabei in einem Ruhezustand des Spendersystems geschlossen und wird nur bedarfsweise durch Aufbringen eines Differenzdrucks geöffnet. Das mindestens eine druckgesteuerte Ventil ist vorzugsweise so gestaltet und/oder angeordnet, dass es bei einem um den Differenzdruck-Schwellwert höheren Druck in dem Vorratsbehälter gegenüber der Mediumkammer öffnet. Ein mittels der Stellvorrichtung erzeugter Differenzdruck ist dabei vorzugsweise derart gewählt, dass der Differenzdruck größer oder gleich dem Differenzdruck-Schwellwert zum Öffnen des druckgesteuerten Einlassventils oder Auslassventils ist. Die druckbetätigten Ventile sind in einer vorteilhaften Ausgestaltung als druckabhängige öffnende Schlitzventile gestaltet. Als Schlitzventil wird im Zusammenhang mit der Erfindung ein über einer Öffnung angeordnetes, geschlitztes Membranelement bezeichnet, welches bei Anliegen eines Öffnungsdrucks auf einer in Austragrichtung stromaufwärts des Ventils liegenden Seite oder eines Unterdrucks auf einer in Austragrichtung stromabwärts des Ventils liegenden Seite in eine Austragrichtung öffnet, jedoch die Öffnung entgegen der Austragrichtung verschließt. Für derartige Schlitzventile eignen sich elastische Kunststoffe wie TPE (Thermoplastische Elastomere).

In vorteilhaften Ausgestaltungen weist die Mediumkammer eine volumenvariable Hauptkammer und eine mit der Hauptkammer kommunizierte, das Einlassventil aufweisende Anschlusskammer, in welcher der Einlasskanal der Pumpvorrichtung mündet, auf. Durch die Gestaltung ist sichergestellt, dass ein Volumen um den Einlasskanal auch bei einer Veränderung des Volumens der Mediumkammer unverändert bleibt.

Vorzugsweise ist im gekoppelten Zustand eine dem Fördern des Mediums aus der Hauptkammer in die Anschlusskammer entgegenstehende Kraft größer ist als eine dem Fördern des Mediums aus dem Vorratsbehälter in die Anschlusskammer entgegenstehende Kraft. Zu diesem Zweck sind in einer Ausgestaltung die Verbindungen derart gewählt, dass ein Strömungswiderstand zwischen der Hauptkammer und der Anschlusskammer größer ist Strömungswiderstand zwischen dem Vorratsbehälter und der Anschlusskammer. In anderen Ausgestaltungen weist die volumenvariable Hauptkammer einen Schleppkolben auf, wobei einem Nachziehen des Schleppkolbens Kräfte entgegenstehen, welche größer sind als die Kräfte, die einem Fördern des Mediums entgegenstehen. Insbesondere ist hier die Nutzung der Stellelemente zur Erzeugung einer Druckdifferenz vorteilhaft. Insbesondere ist in einer Ausgestaltung vorgesehen, dass der Schleppkolben der Hauptkammer mittels magnetischer Anziehungskräfte in einer Position gehalten wird, wobei ein Nachziehen des Schleppkolbens und damit ein Fördern des Mediums aus der Hauptkammer verhindert wird. Dadurch ist es möglich, dass eine Förderung des Mediums in einem gekoppelten Zustand bevorzugt aus dem Vorratsbehälter erfolgt, Je nach Gestaltung wird nach einer Entleerung des Vorratsbehälters das Medium aus der Hauptkammer gefördert oder ist das Spendermodul für dessen Entleerung von dem Vorratsbehälter zu trennen.

Die Hauptkammer und die Anschlusskammer sind vorzugsweise über einen als Ringspalt gestalteten Verbindungsabschnitt miteinander kommuniziert.

Für eine einfache und wenig störanfällige Gestaltung weist das Spendermodul vorzugsweise einen die Mediumkammer abschließenden Schleppkolben auf. Der Schleppkolben ist in vorteilhaften Ausgestaltungen als mit de Magneten der Stellvorrichtung zusammenwirkendes, zumindest partiell magnetisches oder magnetisierbares Element gestaltet oder mit diesem gekoppelt.

Wie oben erwähnt, ist der Vorratsbehälter in einer Ausgestaltung als Quetschflasche mit einer Belüftungsöffnung gestaltet. In vorteilhaften Ausgestaltungen weist der der Vorratsbehälter mindestens eine das Medium bevorratende, abgeschlossene Kammer mit einem variablen Volumen auf. Dadurch ist ein sensibles Medium über einen längeren Zeitraum ohne Umgebungskontakt und damit geschützt bevorratbar.

In einer Ausgestaltung ist in der Mediumkammer des Spendermoduls ein erstes Medium vorgesehen, welches bei Kopplung mit dem Vorratsbehälter mit einem darin bevorrateten zweiten Medium vermengt wird. Bei oder nach einem Koppeln des Spendermoduls mit dem Vorratsbehälter wird das zweite Medium in die Mediumkammer gefördert. Bei dem ersten und dem zweiten Medium handelt es sich in einer Ausgestaltung um miteinander reagierende Medien. In anderen Ausgestaltungen ist ein Medium sensibler, sodass an die zugehörige Kammer andere Anforderungen hinsichtlich einer Abdichtung oder dergleichen gestellt sind. Das Auslassventil, das Einlassventile und/oder ein diese kommunizierender und/oder daran anschließender Kanal sind vorzugsweise derart gestaltet, dass ein Rückfluss in den Vorratsbehälter verhindert ist.

### Kurzbeschreibung der Zeichnungen

Weitere Vorteile und Aspekte der Erfindung ergeben sich außer aus den Ansprüchen auch aus der nachfolgenden Beschreibung von bevorzugten Ausführungsbeispielen der Erfindung, die nachfolgend anhand der Figuren erläutert sind. Dabei zeigen:
- Fig. 1: ein erstes Ausführungsbeispiel eines Spendersystems mit einem Spendermodul und einem Vorratsbehälter in einem gekoppelten Zustand,
- Fig. 2:: das Spendermodul gemäß Fig. 1 in einem getrennten Zustand, und
- Fig. 3:: ein zweites Ausführungsbeispiel eines Spendersystems mit einem Spendermodul und einem Vorratsbehälter in einem gekoppelten Zustand.

### Detaillierte Beschreibung der Ausführungsbeispiele

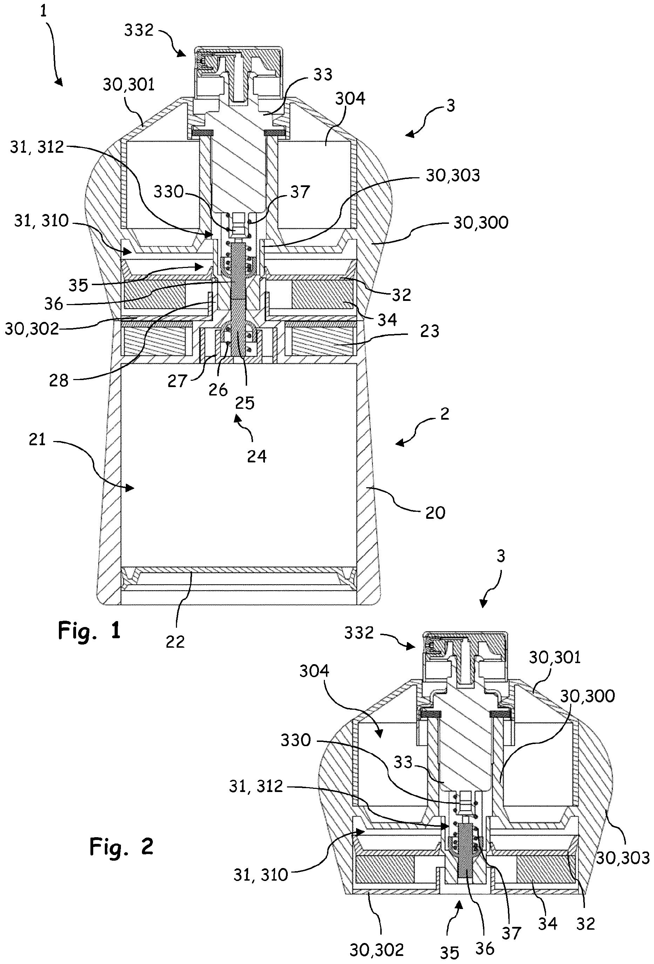

Fig. 1 zeigt in einer geschnittenen Darstellung ein Spendersystem 1 umfassend einen Vorratsbehälter 2 zum Bevorraten eines nicht dargestellten Mediums und ein wiederbefüllbares Spendermodul 3 in einem gekoppelten Zustand, wobei das Spendermodul 3 und der Vorratsbehälter 2 funktional miteinander gekoppelt sind und eine Funktionseinheit bilden. Das Spendermodul 3 ist zudem von dem Vorratsbehälter 2 trennbar und als eigenständige Funktionseinheit nutzbar. Fig. 2 zeigt das Spendermodul 3 in Alleinstellung.

Das Spendermodul 3 weist ein Gehäuse 30 auf, welches eine mit Medium befüllbare Mediumkammer 31 teilweise begrenzt. Das dargestellte Gehäuse 30 ist mehrteilig, umfassend ein Grundgehäuse 300, einen Deckel 301, einen Boden 302 und eine konzentrisch zu dem Grundgehäuse 300 in dem Grundgehäuse 300 angeordnete Hülse 303. Dabei verbleibt in dem dargestellten Ausführungsbeispiel ein Hohlraum 304 zwischen Grundgehäuse 300 und dem Deckel 301. Die Mediumkammer 31 ist als abgeschlossene Kammer mit einem variablen Volumen gestaltet, wobei für eine Volumenvariation ein verschieblich gelagerter Schleppkolben 32 vorgesehen ist. Die Hülse 303 ist in dem dargestellten Ausführungsbeispiel als gemeinsames Bauteil mit dem Grundgehäuse 300 gefertigt. Die Hülse 303 weist drei in Längsrichtung aneinander angrenzende Bereiche mit unterschiedlichen Durchmessern auf. Zwischen einem mittleren Bereich der Hülse 303 und dem in der Zeichnung oben daran anschließenden Bereich sind Durchbrüche für einen Mediumdurchlass vorgesehen. Ein Außenmantel des mittleren Bereichs dient als Führung für den Schleppkolben 32. Der Boden 302 weist eine vom einen konzentrisch zu der Hülse 303 angeordneten hülsenartigen Fortsatz umgebenen Durchbruch auf, wobei der hülsenartige Fortsatz des Bodens 302 zusammen mit einem unteren Bereich der Hülse 303 einen Spalt bildet.

Zum Austragen des Mediums aus der Mediumkammer 31 ist eine manuell betätigbare Pumpvorrichtung 33 vorgesehen. Die Pumpvorrichtung 33 ist in dem dargestellten Ausführungsbeispiel derart gestaltet, dass ein Medium über einen Einlasskanal 330 angesaugt und als Sprühstrahl über eine Austragöffnung 332 abgegeben wird. Die Pumpvorrichtung 33 ist dabei derart gestaltet, dass keine Entlüftung in die Mediumkammer 31 erfolgt. Ein Pumpgehäuse der Pumpvorrichtung 33 ist in dem Gehäuse 30 des Spendermoduls 3 ortsfest zwischen der Hülse 303 und dem Deckel 301 gelagert. Die Pumpvorrichtung 33 umfasst weiter einen die Austragöffnung 332 aufweisenden Austragkopf, welcher relativ zu dem Pumpgehäuse für eine Betätigung der Pumpvorrichtung 33 verlagerbar ist.

An dem Schleppkolben 32 ist ein magnetisches oder magnetisierbares Element 34 angebracht, dessen Funktion weiter unten erläutert wird.

Das Spendermodul 3 ist wiederbefüllbar. Für diesen Zweck weist das Spendermodul 3 ein Einlassventil 35 mit einem Ventilkolben 36 auf. Der Ventilkolben 36 ist entgegen der Kraft einer Rückstellfeder 37 verstellbar. In dem in Fig. 2 dargestellten geschlossenen Zustand liegt der Ventilkolben 36 an einem den Ventilsitz bildenden Bereich des Gehäuses 30 an. Das Spendermodul 3 ist somit in dem in Fig. 2 dargestellten Zustand spendefähig, wobei der Schleppkolben 32 beim Austrag des Mediums für einen Druckausgleich verstellt wird.

In dem in Fig. 1 dargestellten gekoppelten Zustand des Spendermoduls 3 mit dem Vorratsbehälter 2 ist das Einlassventil 35 geöffnet. Dabei ist in dem geöffneten Zustand des Einlassventils 35 der Ventilkolben 36 entgegen der Kraft der Rückstellfeder 37 in eine Öffnungsposition verstellt, sodass ein Befüllen mit einem Medium über das Einlassventil 35 möglich ist.

Die dargestellte Mediumkammer 31 weist eine volumenvariable Hauptkammer 310 und eine mit der Hauptkammer 310 über einen zwischen der Hülse 303 und dem Grundgehäuse 300 gebildeten Kanal kommunizierte Anschlusskammer 312 auf. Das Einlassventil 35 ist in dem dargestellten Ausführungsbeispiel an der Anschlusskammer 312 vorgesehen, in welcher auch der Einlasskanal 330 der Pumpvorrichtung 33 mündet.

Der Vorratsbehälter 2 weist ein Gehäuse 20 auf, welches eine Kammer 21 seitlich begrenzt. In dem Gehäuse 20 ist ein Schleppkolben 22 so angeordnet, dass die Kammer 21 für ein Bevorraten eines Mediums volumenvariabel abgeschlossen ist. An einem dem Schleppkolben 22 gegenüberliegenden Ende ist ein Magnet 23 vorgesehen, dessen Funktion weiter unten erläutert wird. Weiter ist an dem dem Schleppkolben 22 gegenüberliegenden Ende ein Auslassventil 24 mit einem Ventilkolben 25, einer Rückstellfeder 26 und einem Widerlager 27 vorgesehen. Der Ventilkolben 25 ist entgegen der Kraft der Rückstellfeder 26 verstellbar, wobei ein maximaler Verstellweg durch das Widerlager 27 begrenzt ist. Das Widerlager 27 ist so gestaltet, dass eine gute Anströmung des Auslassventils 24 gewährleistet ist.

In dem dargestellten Ausführungsbeispiel wirken die Ventilkolben 36, 25 des Einlassventils 35 und des Auslassventils 24 für eine Verstellbewegung zusammen, sodass in dem gekoppelten Zustand die Ventilkolben 36, 25 des Einlassventils 35 und des Auslassventils 24 jeweils in eine Öffnungsposition verstellt sind. Die Mediumkammer 31 ist so in dem gekoppelten Zustand dauerhaft mit dem Vorratsbehälter 2, genauer mit der Kammer 21 des Vorratsbehälters 2 kommuniziert. Sofern eine Druckdifferenz zwischen den kommunizierten Kammern 31, 21 vorliegt, wird das Medium für einen Druckausgleich gefördert.

In dem dargestellten Ausführungsbeispiel sind somit in anderen Worten in dem gekoppelten Zustand das Einlassventil 35 und das Auslassventil 24 dauerhaft zwangsgeführt geöffnet. Bei einer Betätigung der Pumpvorrichtung 33 in dem gekoppelten Zustand wird Medium aus der Anschlusskammer 312 angesaugt. Dabei ist in dem dargestellten Ausführungsbeispiel eine zum Nachziehen des Schleppkolbens 22 des Vorratsbehälters 2 aufzubringende Kraft kleiner als eine zum Nachziehen des Schleppkolbens 32 in der Hauptkammer 310 der Mediumkammer 31 aufzubringende Kraft. Dadurch wird in dem dargestellten gekoppelten Zustand das Medium bei einer Betätigung der Pumpvorrichtung 33 vorrangig aus der Kammer 21 des Vorratsbehälters 2 gefördert.

Bei einem Trennen des Spendermoduls 3 von dem Vorratsbehälter 2 schließen das Einlassventil 35 und das Auslassventil 24 schlagartig, sodass ein Auslaufen von Medium verhindert wird.

Das Spendermodul 3 ist somit sowohl in dem aufgesetzten Zustand als auch in Alleinstellung spendefähig. In dem dargestellten Ausführungsbeispiel ist die doppelte Funktion des Spendermoduls 3 als eigenständige Baueinheit und in Kombination mit dem Vorratsbehälter 2 auch durch eine Formgebung für den Nutzer visualisiert. Das Gehäuse 20 des Vorratsbehälters 2 ist als konische, rotationssymmetrische Säule gestaltet, wobei sich ein Außendurchmesser des Gehäuses 20 in Richtung eines bodenseitigen Endes vergrößert. Ein Öffnungswinkel ist dabei klein gewählt. Das Gehäuse 30 des dargestellten Spendermoduls 3 ist ebenfalls rotationssymmetrisch und kugel- oder zwiebelförmig gestaltet. Das Gehäuse 30 ist auf das Gehäuse 20 des Vorratsbehälters 2 kuppelartig aufgesetzt. Die beiden Teile des Spendersystems 1 sind somit jeweils als eigenständiges Element wahrnehmbar. Gleichzeitig sind die Formen derart aneinander angepasst, dass sie in dem dargestellten gekoppelten Zustand eine ästhetische Einheit bilden. Die Form des Gehäuses 30 ist nicht nur aus ästhetischen Gründen vorteilhaft. Sie ermöglicht auch eine gute Haptik für eine Betätigung der Pumpvorrichtung 33.

Wie oben erwähnt, weisen der Vorratsbehälter 2 und das Spendermodul 3 einen Magneten 23 bzw. ein magnetisches und/oder magnetisierbares Element 34 auf. In dem dargestellten Ausführungsbeispiel haben diese Elemente eine Doppelfunktion.

Sie dienen zum einen als Kopplungselemente, um das Spendermodul 3 und den Vorratsbehälter 2 wiederholt zerstörungsfrei lösbar miteinander zu verbinden. Bei einem Verbinden werden dabei das Einlassventil 35 und das Auslassventil 24 geöffnet, sodass die Mediumkammer 31 und die Kammer 21 des Vorratsbehälters 2 dauerhaft fluidisch gekoppelt sind. Zusätzlich sind in dem dargestellten Ausführungsbeispiel die Bereiche um das Einlassventil 35 und das Auslassventil 24 als Steckverbindung gestaltet, sodass eine Ausrichtung oder Zentrierung der Bauteile für eine fluidische Verbindung gewährleistet ist. Das Gehäuse 30 des Spendermoduls 3 weist hierfür einen ringförmigen, zwischen dem Boden 302 und der Hülse 303 geformten Spalt auf, in welchen eine komplementäre Hülse 28 des Gehäuses 20 des Vorratsbehälters eingeführt ist. Die Hülse 28 und der Spalt sind in dem dargestellten Ausführungsbeispiel rotationssymmetrisch und konzentrisch zu einer Längsachse des Spendersystems 1 angeordnet. In anderen Ausgestaltungen sind die nichtrotationssymmetrische und/oder außermittige Anordnungen vorgesehen, wobei eine Verbindung der Teile nur in einer bestimmten Ausrichtung möglich ist.

Der Magnet 23 und das magnetische und/oder magnetisierbare Element 34 dienen weiter als Stellelemente, mittels welchen bei oder nach einem Koppeln ein Differenzdruck zwischen der Mediumkammer 31 und dem Vorratsbehälter 2, genauer der Kammer 21 des Vorratsbehälters 2 erzeugbar ist. In dem dargestellten Ausführungsbeispiel wird aufgrund einer durch den Magneten 23 auf das magnetische und/oder magnetisierbare Element 34 ausgeübten Anziehungskraft der Schleppkolben 32 des Spendermoduls 3 verschoben, sodass ein Volumen der Mediumkammer 31 vergrößert wird. Aufgrund der Vergrößerung des Volumens kommt es zu einem Druckabfall in der Mediumkammer 31, wobei Medium aus dem Vorratsbehälter 2 in die Mediumkammer 31 für einen Druckausgleich gefördert wird. Ein Druckausgleich in dem Vorratsbehälter 2 erfolgt durch Nachführen des Schleppkolbens 22. Die magnetische Anziehungskraft wirkt solange die Teile gekoppelt sind. Die magnetische Anziehungskraft auf den Schleppkolben 32 steht damit auch einem Nachziehen des Schleppkolbens 32 bei einer Betätigung der Pumpvorrichtung 33 in einem gekoppelten Zustand entgegen, sodass das Medium bei einer Betätigung der Pumpvorrichtung 33 vorrangig aus der Kammer 21 des Vorratsbehälters 2 gefördert wird.

Anstelle des Schleppkolbens 22 weist der Vorratsbehälter 2 in anderen Ausgestaltungen eine Belüftungsöffnung für einen Druckausgleich auf. Ein Fördern des Mediums erfolgt dabei über ein Steigrohr. In noch einer anderen Ausgestaltung ist das Medium in dem Vorratsbehälter 2 in einem kollabierbaren Beutel oder Faltenbalg bevorratet, wobei eine für die Bewegung des kollabierbaren Beutels oder Faltenbalgs ausreichende Belüftung des Vorratsbehälters 2 sichergestellt ist.

Dank des Magneten 23 und des magnetischen und/oder magnetisierbaren Elements 34 wird für jede dieser Ausgestaltungen ein Spendersystem 1 geschaffen, dessen Nachfüllmechanismus für den Konsumenten wenig oder nicht sichtbar ist und bei welchem ein Nachfüllen ohne "aktive" Handlungen des Konsumenten möglich ist. Der Magnet 23 und das Element 24 sind in dem dargestellten Ausführungsbeispiel jeweils als Ringscheiben gestaltet. Andere Ausgestaltungen sind jedoch denkbar. Insbesondere ist es auch denkbar, jeweils mehrere Magneten mit unterschiedlichen, wechselseitigen Polungen an dem Spendermodul 3 und dem Vorratsbehälter 2 vorzusehen, welche eine Kopplung in einer bestimmten Ausrichtung unterstützen.

Die Kopplungsfunktionen des Magnetsystems ist in anderen Ausgestaltungen durch andere Systeme übernommen.

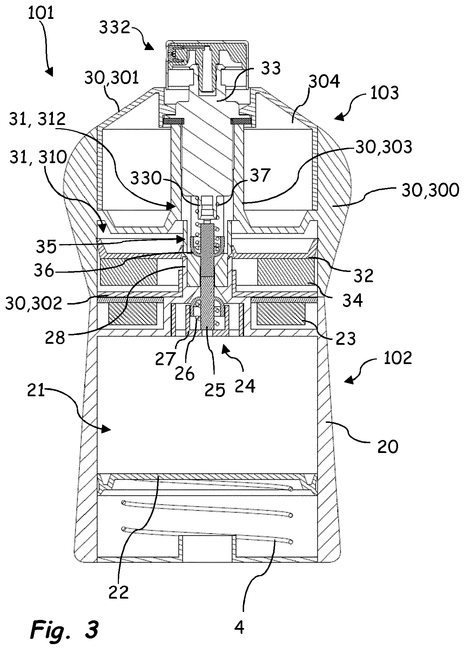

Fig. 3 zeigt eine alternative Ausgestaltung eines Spendersystems 101 umfassend einen Vorratsbehälter 102 mit einem Auslassventil 24 und ein Spendermodul 103 mit einem Einlassventil 35. Das Spendersystem 101 ist ähnlich dem Spendersystem 1 gemäß Fig. 1 und 2 und für gleiche oder ähnliche Bauteile werden einheitliche Bezugszeichen verwendet Im Unterschied zu der Ausgestaltung gemäß den Figuren 1 und 2 ist der Schleppkolben 22 des Vorratsbehälters 102 zusätzlich mittels einer Feder 4 belastet. Mittels der Feder 4 wird der Schleppkolben 22 in eine Richtung zur Verkleinerung der Mediumkammer 21 gezwungen, wobei das (inkompressible) Medium der Bewegung entgegensteht. Bei einer Öffnung des Auslassventils 24 kommt es zu einem Austrag des Mediums.

## Patentansprüche

1. Spendersystem umfassend
- einen Vorratsbehälter (2, 102) zum Bevorraten eines Mediums mit mindestens einem Auslassventil (24),
- ein wiederbefüllbares Spendermodul (3, 103) mit einer mit einem Medium befüllbaren Mediumkammer (31), mit einer zum Austragen des Mediums aus der Mediumkammer (31) betätigbaren, einen Einlasskanal (330) aufweisenden Pumpvorrichtung (33) und mit mindestens einem Einlassventil (35), und
- eine Stellvorrichtung,
wobei
- die Mediumkammer (31) als abgeschlossene Kammer mit einem variablen Volumen gestaltet ist,
- für ein Befüllen der Mediumkammer (31) das Spendermodul (3, 103) mit dem Vorratsbehälter (2, 102) koppelbar ist, wobei bei einem Befüllen das mindestens eine Einlassventil (35) und das mindestens eine Auslassventil (24) zwangsgeführt oder druckbeaufschlagt geöffnet sind, sodass die Mediumkammer (31) mit dem Vorratsbehälter (2, 102) kommuniziert ist,
- in einem getrennten Zustand des Spendermoduls (3, 103) und des Vorratsbehälters (2, 102, 502) das mindestens eine Einlassventil (35) und das mindestens eine Auslassventil (24) geschlossen sind, und
- mittels der Stellvorrichtung bei oder nach einem Koppeln des Spendermoduls (3, 103) und des Vorratsbehälters (2, 102) ein Volumen der Mediumkammer (31) zur Erzeugung eines Differenzdrucks zwischen der Mediumkammer (31) und dem Vorratsbehälter (2, 102) vergrößerbar ist, wobei ein Druck in dem Vorratsbehälter (2, 102) höher ist als in der Mediumkammer (31), um Medium aus dem Vorratsbehälter (2, 102) in die Mediumkammer (31) zu fördern,
**dadurch gekennzeichnet, dass**
die Stellvorrichtung mindestens einen Magneten (23) und mindestens ein mit dem Magneten für eine Volumenänderung der Mediumkammer (31) zusammenwirkendes, zumindest partiell magnetisches oder magnetisierbares Element (34) aufweist.

2. Spendersystem nach Anspruch 1, **dadurch gekennzeichnet, dass** die Stellvorrichtung zusätzlich Druckerzeugungselemente (4) aufweist, mittels welchen ein erhöhter Druck in dem Vorratsbehälter erzeugbar ist, um Medium aus dem Vorratsbehälter (102) in die Mediumkammer (31) zu fördern.

3. Spendersystem nach Anspruch 1 oder 2, **dadurch gekennzeichnet, dass** das Spendermodul (3, 103) und der Vorratsbehälter (2, 102) zueinander komplementäre Kopplungselemente für eine zerstörungsfrei lösbare, wiederholbare, funktionale Kopplung aufweisen, wobei in einem gekoppelten Zustand das mindestens eine Einlassventil (35) und das mindestens eine Auslassventil (24) zumindest zeitweise bei einer Betätigung der Pumpvorrichtung (33) zwangsgeführt oder druckbeaufschlagt geöffnet sind, um in einem gekoppelten Zustand eine Förderung des Mediums aus dem Vorratsbehälter (2, 102) zu bewirken.

4. Spendersystem nach Anspruch 3, **dadurch gekennzeichnet, dass** die Kopplungselemente eine Steckverbindung, einen Bajonettverschluss und/oder einen Magnetverschluss bilden.

5. Spendersystem nach einem der Ansprüche 1 bis 4, **dadurch gekennzeichnet, dass** das mindestens eine Einlassventil (35) und das mindestens eine Auslassventil (24) zwei zusammenwirkende kraftbeaufschlagte Ventilkolben (36, 25) aufweisen, welche in einem gekoppelten Zustand in eine Öffnungsposition verstellt sind.

6. Spendersystem nach einem der Ansprüche 1 bis 5, **dadurch gekennzeichnet, dass** das die Mediumkammer (31) eine Hauptkammer (310) mit einem variablen Volumen und eine mit der Hauptkammer (310) kommunizierte, das mindestens eine Einlassventil (35, 535) aufweisende Anschlusskammer (312) mit einem konstanten Volumen aufweist, wobei ein Einlasskanal (330) der Pumpvorrichtung (33) in der Anschlusskammer (312) mündet.

7. Spendersystem nach Anspruch 6, **dadurch gekennzeichnet, dass** in einem gekoppelten Zustand eine dem Fördern des Mediums aus der Hauptkammer (310) in die Anschlusskammer (312) entgegenstehende Kraft größer ist als eine dem Fördern des Mediums aus dem Vorratsbehälter (2, 102) in die Anschlusskammer (312) entgegenstehende Kraft.

8. Spendersystem nach Anspruch 6 oder 7, **dadurch gekennzeichnet, dass** die Hauptkammer (310) und die Anschlusskammer (312) über einen als Ringspalt gestalteten Verbindungsabschnitt miteinander kommuniziert sind.

9. Spendersystem nach einem der Ansprüche 1 bis 8, **dadurch gekennzeichnet, dass** die Mediumkammer (31) einen Schleppkolben (32) aufweist.

10. Spendersystem nach Anspruch 9, **dadurch gekennzeichnet, dass** die Stellvorrichtung mindestens einen an dem Vorratsbehälter angeordneten Magneten (23) und mindestens ein mit dem Magneten für eine Volumenänderung der Mediumkammer (31) zusammenwirkendes, zumindest partiell magnetisches oder magnetisierbares, an dem Schleppkolben (32) angeordnetes oder einteilig mit diesem gestaltetes Element (34) aufweist.

11. Spendersystem nach einem der Ansprüche 1 bis 10, **dadurch gekennzeichnet, dass** der Vorratsbehälter (2, 102) mindestens eine das Medium bevorratende, abgeschlossene Kammer mit einem variablen Volumen aufweist.

## Claims

1. Dispenser system comprising
- a storage vessel (2, 102) for storing a medium with at least one outlet valve (24),
- a refillable dispenser module (3, 103) with a medium chamber (31) which can be filled with a medium, with a pumping apparatus (33) which has an inlet channel (330) and can be actuated for discharging the medium out of the medium chamber (31), and with at least one inlet valve (35), and
- an actuating apparatus,
- the medium chamber (31) being designed as a closed chamber with a variable volume,
- it being possible for the dispenser module (3, 103) to be coupled to the storage vessel (2, 102) for filling the medium chamber (31), the at least one inlet valve (35) and the at least one outlet valve (24) being open in a forcibly actuated or pressure-loaded manner during filling, with the result that the medium chamber (31) communicates with the storage vessel (2, 102),
- the at least one inlet valve (35) and the at least one outlet valve (24) being closed in a disconnected state of the dispenser module (3, 103) and the storage vessel (2, 102, 502), and
- it being possible for a volume of the medium chamber (31) to be enlarged by means of the actuating apparatus during or after the coupling of the dispenser module (3, 103) and the storage vessel (2, 102) in order to generate a differential pressure between the medium chamber (31) and the storage vessel (2, 102), a pressure in the storage vessel (2, 102) being higher than in the medium chamber (31), in order to convey medium out of the storage vessel (2, 102) into the medium chamber (31),
**characterized in that**
the actuating apparatus has at least one magnet (23) and at least one at least partially magnetic or magnetizable element (34) which interacts with the magnet for a volume change of the medium chamber (31).

2. Dispenser system according to Claim 1, **characterized in that** the actuating apparatus additionally has pressure generation elements (4), by means of which an increased pressure can be generated in the storage vessel, in order to convey medium out of the storage vessel (102) into the medium chamber (31).

3. Dispenser system according to Claim 1 or 2, **characterized in that** the dispenser module (3, 103) and the storage vessel (2, 102) have coupling elements which are complementary to one another for repeatable, functional coupling which can be released without destruction, the at least one inlet valve (35) and the at least one outlet valve (24) being open in a forcibly actuated or pressure-loaded manner, in a coupled state, at least temporarily during an actuation of the pumping apparatus (33), in order to bring about conveying of the medium out of the storage vessel (2, 102) in a coupled state.

4. Dispenser system according to Claim 3, **characterized in that** the coupling elements form a plug-in connection, a bayonet closure and/or a magnetic closure.

5. Dispenser system according to one of Claims 1 to 4, **characterized in that** the at least one inlet valve (35) and the at least one outlet valve (24) have two interacting force-loaded valve pistons (36, 25) which are adjusted into an open position in a coupled state.

6. Dispenser system according to one of Claims 1 to 5, **characterized in that** the medium chamber (31) has a main chamber (310) with a variable volume and a connector chamber (312) with a constant volume which communicates with the main chamber (310) and has the at least one inlet valve (35, 535), an inlet channel (330) of the pumping apparatus (33) opening into the connector chamber (312) .

7. Dispenser system according to Claim 6, **characterized in that**, in a coupled state, a force which counteracts conveying of the medium out of the main chamber (310) into the connector chamber (312) is greater than a force which counteracts conveying of the medium out of the storage vessel (2, 102) into the connector chamber (312).

8. Dispenser system according to Claim 6 or 7, **characterized in that** the main chamber (310) and the connector chamber (312) communicate with one another via a connecting section which is configured as an annular gap.

9. Dispenser system according to one of Claims 1 to 8, **characterized in that** the medium chamber (31) has a trailer piston (32).

10. Dispenser system according to Claim 9, **characterized in that** the actuating apparatus has at least one magnet (23) which is arranged on the storage vessel and at least one at least partially magnetic or magnetizable element (34) which is arranged on the trailer piston (32) or is configured in one piece with the latter and interacts with the magnet for a volume change of the medium chamber (31) .

11. Dispenser system according to one of Claims 1 to 10, **characterized in that** the storage vessel (2, 102) has at least one closed chamber with a variable volume which stores the medium.

## Revendications

1. Système de distribution, comprenant
- un réservoir (2, 102) pour stocker un milieu, comprenant au moins une soupape de sortie (24),
- un module de distribution pouvant être à nouveau rempli (3, 103) avec une chambre de milieu (31) pouvant être remplie avec un milieu, comprenant un dispositif de pompe (33) présentant un canal d'entrée (330) et pouvant être commandé pour évacuer le milieu hors de la chambre de milieu (31), et comprenant au moins une soupape d'entrée (35), et
- un dispositif de commande,
- la chambre de milieu (31) étant configurée sous forme de chambre fermée avec un volume variable,
- le module de distribution (3, 103), pour un remplissage de la chambre de milieu (31), pouvant être accouplé au réservoir (2, 102), l'au moins une soupape d'entrée (35) et l'au moins une soupape de sortie (24) étant ouvertes par force ou par sollicitation par pression lors d'un remplissage, de sorte que la chambre de milieu (31) communique avec le réservoir (2, 102),
- dans un état séparé du module de distribution (3, 103) et du réservoir (2, 102, 502), l'au moins une soupape d'entrée (35) et l'au moins une soupape de sortie (24) étant fermées, et
- un volume de la chambre de milieu (31), pour générer une différence de pression entre la chambre de milieu (31) et le réservoir (2, 102), pouvant être augmenté au moyen du dispositif de commande lors d'un accouplement ou après un accouplement du module de distribution (3, 103) et du réservoir (2, 102), une pression dans le réservoir (2, 102) étant supérieure à la pression dans la chambre de milieu (31), afin de refouler du milieu hors du réservoir (2, 102) dans la chambre de milieu (31),
**caractérisé en ce que**
le dispositif de commande présente au moins un aimant (23) et au moins un élément au moins partiellement magnétique ou magnétisable (34) coopérant avec l'aimant pour faire varier le volume de la chambre de milieu (31).

2. Système de distribution selon la revendication 1, **caractérisé en ce que** le dispositif de commande présente en outre des éléments de génération de pression (4) au moyen desquels une pression accrue peut être générée dans le réservoir afin de refouler du milieu hors du réservoir (102) dans la chambre de milieu (31).

3. Système de distribution selon la revendication 1 ou 2, **caractérisé en ce que** le module de distribution (3, 103) et le réservoir (2, 102) présentent des éléments d'accouplement complémentaires l'un de l'autre pour un accouplement fonctionnel reproductible et pouvant être desserré sans destruction, l'au moins une soupape d'entrée (35) et l'au moins une soupape de sortie (24), dans un état accouplé, étant ouvertes par force ou par sollicitation par pression au moins temporairement lors d'un actionnement du dispositif de pompe (33), afin de provoquer dans un état accouplé un refoulement du milieu hors du réservoir (2, 102).

4. Système de distribution selon la revendication 3, **caractérisé en ce que** les éléments d'accouplement forment un raccord enfichable, une fermeture à baïonnette et/ou une fermeture magnétique.

5. Système de distribution selon l'une quelconque des revendications 1 à 4, **caractérisé en ce que** l'au moins une soupape d'entrée (35) et l'au moins une soupape de sortie (24) présentent deux pistons de soupape (36, 25) coopérants et sollicités par force, qui, dans un état accouplé, sont amenés dans une position d'ouverture.

6. Système de distribution selon l'une quelconque des revendications 1 à 5, **caractérisé en ce que** la chambre de milieu (31) présente une chambre principale (310) ayant un volume variable et une chambre de raccordement (312) présentant l'au moins une soupape d'entrée (35, 535), communiquant avec la chambre principale (310) et ayant un volume constant, un canal d'entrée (330) du dispositif de pompe (33) débouchant dans la chambre de raccordement (312).

7. Système de distribution selon la revendication 6, **caractérisé en ce que** dans un état accouplé, une force s'opposant au refoulement du milieu hors de la chambre principale (310) dans la chambre de raccordement (312) est supérieure à une force s'opposant au refoulement du milieu hors du réservoir (2, 102) dans la chambre de raccordement (312) .

8. Système de distribution selon la revendication 6 ou 7, **caractérisé en ce que** la chambre principale (310) et la chambre de raccordement (312) communiquent l'une avec l'autre par le biais d'une portion de raccordement configurée sous forme de fente annulaire.

9. Système de distribution selon l'une quelconque des revendications 1 à 8, **caractérisé en ce que** la chambre de milieu (31) présente un piston d'entraînement (32).

10. Système de distribution selon la revendication 9, **caractérisé en ce que** le dispositif de commande présente au moins un aimant (23) disposé au niveau du réservoir et au moins un élément (34) coopérant avec l'aimant pour faire varier le volume de la chambre de milieu (31), au moins partiellement magnétique ou magnétisable, disposé sur le piston d'entraînement (32) ou réalisé d'une seule pièce avec celui-ci.

11. Système de distribution selon l'une quelconque des revendications 1 à 10, **caractérisé en ce que** le réservoir (2, 102) présente au moins une chambre fermée stockant le milieu, ayant un volume variable.
